# EUROPÄISCHE PATENTSCHRIFT

(11) **EP 0 757 188 B1**
(45) Veröffentlichungstag und Bekanntmachung des Hinweises auf die Patenterteilung: **04.10.2000**
(21) Anmeldenummer: 96111925.2
(22) Anmeldetag: 24.07.1996
(51) Int. Cl.: F16D 66/02, F16D 55/22

(54) **Schwimmsattel für Scheibenbremse mit Halterung für Warnkontaktstecker und Warnkabel**
Floating caliper for disc brake with holder for warning contact plug and warning cable
Etrier coulissant pour frein à disque avec support de prise de contact d'avertissement et câble d'avertissement

(30) Priorität: 03.08.1995 DE 19528466
(43) Veröffentlichungstag der Anmeldung: 05.02.1997
(73) Patentinhaber: Continental Teves AG & Co. oHG, 60488 Frankfurt (DE)
(72) Erfinder: Bernhard, Klaus, 65239 Hochheim (DE)

(56) Entgegenhaltungen:
- EP-A- 0 602 866
- DE-A- 3 917 125
- DE-A- 4 431 724
- US-A- 5 404 970

## Beschreibung

Die Erfindung betrifft einen Schwimmsattel für eine Scheibenbremse gemäß dem Oberbegriff des Patentanspruchs 1.

Aus der Offenlegungsschrift DE 40 27 944 A1 ist ein Bremssattel bekannt, bei dem die Halterung eines Warnkontaktstekkers einer elektrischen Reibbelagwarnvorrichtung und eines Bremsschlauches über einen am Bremssattel verschraubten, kombinierten Haltewinkel realisiert wird. Der Nachteil dieser bekannten Anordnung besteht darin, daß für die Schraubverbindung ein Gewinde in den Bremssattel eingebracht werden muß. Dieser zusätzliche Bearbeitungsgang ist mit erhöhten Fertigungskosten verbunden.

Die DE-A-39 17 125 beschreibt eine Teilbelag-Scheibenbremse mit einer elektrischen Reibbelagverschleiß-Warneinrichtung, bei der der elektrische Leiter mittels einer Schutzhülse an einem Vorsprung des Schwimmsattel-Gehäuses befestigt ist. Dabei ist die Befestigung des Leiters mit Schutzhülse am Schwimmsattel-Gehäuse nicht notwendigerweise verliersicher bzw. die verliersichere Befestigung erfordert einen zusätzlichen mechanischen Bearbeitungsschritt. Zudem ist für die besagte Anordnung eine Halterung für einen Warnkontaktstekker nicht vorgesehen.

Aus der EP-A-0 602 866 ist schließlich eine Scheibenbremse mit einer elektrischen Reibbelagverschleiß-Warneinrichtung bekannt, bei der abschnittsweise ein elektrischer Leiter sowie ein Warnkontaktstecker mittels einer offenen Trägerhülse am Bremsgehäuse befestigt ist. Dabei ist die den Leiter sowie den Warnkotaktstecker aufnehmende Trägerhülse in zwei Befestigungsöffnungen des Bremsgehäuses fixiert. Derartige Befestigungsöffnungen erfordern einen unerwünschten, zusätzlichen mechanischen Bearbeitungsschritt. Ferner ist die Trägerhülse unnötig kompliziert gestaltet und dadurch in der Herstellung aufwendig. Schließlich besteht die Gefahr des Lösens der Trägerhülse insbesondere in axialer Richtung speziell bei Erschütterungen des Bremsgehäuses.

Aufgabe der Erfindung ist es, einen verbesserten Schwimmsattel für eine Scheibenbremse mit Reibbelagwarnvorrichtung anzugeben, bei dem sowohl ein Warnkontaktstecker als auch ein Warnkabel einer elektrischen Reibbelagwarnvorrichtung am Schwimmsattel möglichst kostengünstig und wartungsfreundlich befestigt werden kann.

Die erfindungsgemäße Lösung der Aufgabe ergibt sich aus dem kennzeichnenden Teil des Hauptanspruchs. Die Lösung besteht prinzipiell darin, beim Gießen des Schwimmsattels eine unbearbeitete Erhebung anzuformen, an der ein einteiliger Blechträger aufgeclipst werden kann und als Halterung für den Warnkontaktstecker sowie für das Warnkabel der elektrischen Reibbelagwarnvorrichtung dient.

Gemäß der Erfindung ist die gegossene, unbearbeitete Erhebung im wesentlichen rechteckig ausgebildet und in ihrem Fußbereich mit einer umlaufenden Einschnürung versehen. Der Blechträger, auf dem der Warnkontaktstecker gehalten und das Warnkabel der elektrischen Reibbelagwarnvorrichtung geführt wird, greift mit Federlaschen an jeder Seite der Erhebung in die Einschnürung und sichert so den Blechträger gegen Verdrehen. Vorteil dieser Lösung ist, neben der kostengünstigeren Herstellung des Schwimmsattels, die wartungsfreundliche Montage des Blechträgers, der einfach auf die Erhebung des Schwimmsattels aufgedrückt wird und in der Einschnürung einrastet.

In einer weiteren Ausgestaltung der Erfindung nach Anspruch 2 ist der Blechträger mit einem Haltesteg ausgestattet, an dem der Warnkontaktstecker der Reibbelagwarnvorrichtung angebracht wird. Der Haltesteg wird dabei derart geformt, daß der Warnkontaktstecker die gewünschte Position und Winkelorientierung zum Schwimmsattel einnehmen kann.

Eine Weiterbildung der Erfindung gemäß Anspruch 3 besteht darin, daß der Blechträger einen abgewinkelten Arm besitzt, der mit einer geöffneten Öse versehen ist, in der das Warnkabel der elektrischen Reibbelagwarnvorrichtung in einfacher Weise eingehangen ist. Dadurch wird das Warnkabel sicher geführt und vor Beschädigungen durch bewegliche Bauteile der Bremse geschützt.

Im folgenden werden vorteilhafte Ausführungsformen der Erfindung anhand der Figuren näher erläutert. Dabei sind in den verschiedenen Zeichnungen gleiche Bauteile mit gleichen Bezugszeichen versehen.

Es zeigen:
- Figur 1: eine Teilansicht eines erfindungsgemäßen Schwimmsattels mit einer Erhebung, an der ein Blechträger eingerastet ist, welcher den Warnkontaktstecker und das Warnkabel einer elektrischen Reibbelagwarnvorrichtung aufnimmt,
- Figur 2: eine Seitenansicht des Schwimmsattels aus axialer Richtung ohne den Warnkontaktstecker der Reibbelagwarnvorrichtung,
- Figur 3: eine Ansicht der Materialerhebung auf dem Schwimmsattel im Schnitt entlang der Linie P-P aus Figur 2.

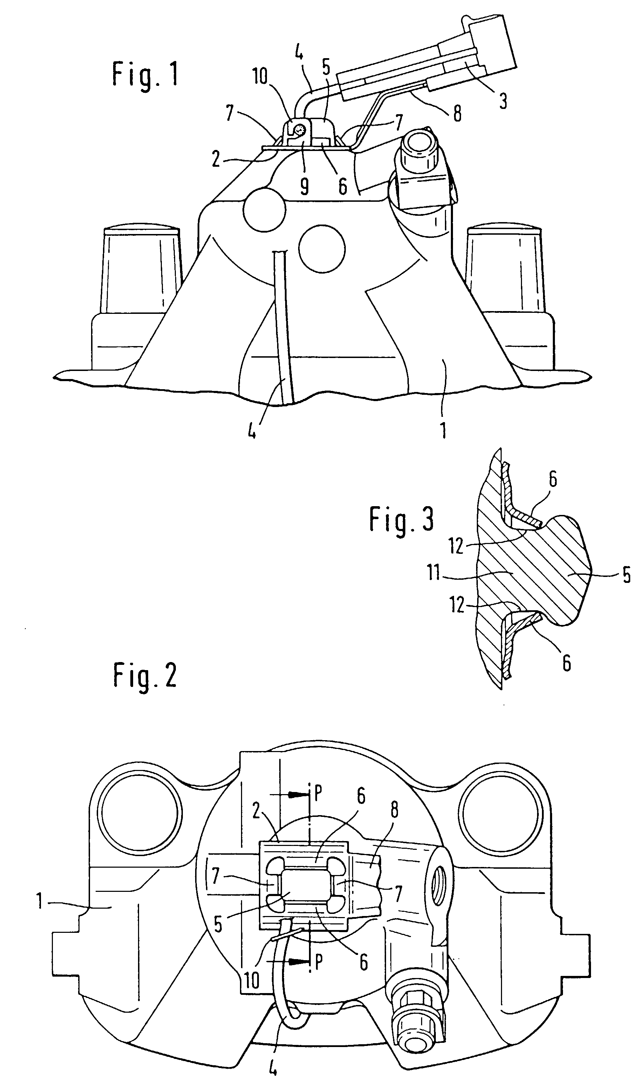

In den Figuren 1 und 2 ist ein erfindungsgemäßes Ausführungsbeispiel eines Schwimmsattels 1 dargestellt, an dem über einen einteiligen Blechträger 2 ein Warnkontaktstecker 3 sowie ein Warnkabel 4 einer elektrischen Reibbelagwarnvorrichtung am Schwimmsattel 1 befestigt ist. Das Warnkabel 4 steht dabei an einem Ende mit einem Warnsensor eines nicht gezeigten Reibbelages in Verbindung und mündet am anderen Ende in den Warnkontaktstecker 3. Der Blechträger 2 ist auf einer unbearbeiteten Erhebung 5 festgeklemmt, die beim Gießen des Schwimmsattels 1 kostengünstig angeformt wird. Wie Figur 2 zu entnehmen ist, ist die Erhebung im wesentlichen rechteckig ausgebildet und wird von den Federlaschen 6,7 des Blechträgers 2 formschlüssig von allen Seiten umgriffen. Dadurch wird ein Verdrehen des Blechträgers 2 gegenüber dem Schwimsattel 1 vermieden. Der Blechträger 2 selbst verfügt über einen gebogenen Haltesteg 8, an dem der Warnkontaktstecker der Reibbelagwarnvorrichtung angebracht ist. Durch diesen Haltesteg 8 kann der Warnkontaktstecker 3 in seiner gewünschten Position und Winkelorientierung am Schwimmsattel fixiert werden. Weiterhin ist an dem Blechträger 2 ein abgewinkelter Arm 9 mit einer geöffneten Öse 10 vorgesehen, in die das Warnkabel 4 einghängt wird. Dadurch wird das Warnkabel 4 sicher geführt und vor Beschädigungen durch bewegliche Bauteile der Bremse geschützt.

Eine Ausgestaltungsform der Erhebung 5 auf dem Schwimmsattel 1 wird im Schnitt anhand der Figur 3 verdeutlicht. In ihrem Fußbereich 11 verfügt die Erhebung 5 über eine umlaufende Einschnürung 12, in die die Federlaschen 6,7 des aufgedrückten Blechträgers 2 einrasten. Auf diese Art und Weise wird der Blechträger 2 in axialer Richtung am Schwimmsattel 1 gehalten und gegen Verdrehen gesichert.

## Patentansprüche

1. Schwimmsattel (1) einer Scheibenbremse mit einer elektrischen Reibbelagwarnvorrichtung, bei der ein Warnkontaktstecker (3) und ein Warnkabel (4) der elektrischen Reibbelagwarnvorrichtung mittels eines Blechträgers (2) am Schwimmsattel (1) befestigt sind, wobei der Blechträger den Warnkontaktstecker (3) und das Warnkabel (4) der elektrischen Reibbelagwarnvorrichtung aufnimmt, dadurch **gekennzeichnet**, daß am gegossenen Schwimmsattel (1) eine während des Gießens angeformte, unbearbeitete Erhebung (5) vorgesehen ist, die im wesentlichen rechteckig ausgebildet ist und in ihrem Fußbereich (11) eine Einschnürung (12) besitzt, wobei der einteilige Blechträger (2) über mindestens zwei Federlaschen (6,7) verfügt und mit diesen Federlaschen die Erhebung (5) auf den Schwimmsattel (1) von allen Seiten umgreift, so daß die Federlaschen (6,7) in die Einschnürung (12) einrasten .

2. Schwimmsattel mit einem Blechträger nach Anspruch 1, dadurch **gekennzeichnet,** daß der Blechträger (2) einen Haltesteg (8) besitzt, an dem der Warnkontaktstecker (3) der elektrischen Reibbelagwarnvorrichtung befestigt ist.

3. Schwimmsattel mit einem Blechträger nach Anspruch 2, dadurch **gekennzeichnet,** daß der Blechträger (2) einen abgewinkelten Arm (9) besitzt, der mit einer geöffneten Öse (10) versehen ist, in der das Warnkabel (4) der elektrischen Reibbelagwarnvorrichtung einhakbar ist.

## Claims

1. Floating caliper (1) of a disc brake including an electric friction lining alarm device, wherein a warning contact plug (3) and a warning cable (4) of the electric friction lining alarm device are attached to the floating caliper (1) by means of a sheet-metal support member (2), the sheet-metal support member accommodating the warning contact plug (3) and the warning cable (4) of the electric friction lining alarm device,
**characterized** in that provided on the cast floating caliper (1) is an unmachined projection (5) which is shaped during the casting process and has a generally rectangular configuration and a waist (12) in its foot area (11), wherein the one-part sheet-metal support member (2) includes at least two resilient lugs (6, 7) and by way of these resilient lugs embraces the projection (5) on the floating caliper (1) from all sides so that the resilient lugs (6, 7) become engaged in the waist (12).

2. Floating caliper including a sheet-metal support member as claimed in claim 1,
**characterized** in that the sheet-metal support member (2) has a holding web (8) to which the warning contact plug (3) of the electric friction lining alarm device is attached.

3. Floating caliper including a sheet-metal support member as claimed in claim 2,
**characterized** in that the sheet-metal support member (2) has a deflected arm (9) which includes an open eyelet (10) into which the warning cable (4) of the electric friction lining alarm device can be hooked.

## Revendications

1. Etrier flottant (1) d'un frein à disque comportant un dispositif électrique d'avertissement d'usure des garnitures de frottement, où une prise de contact d'avertissement (3) et un fil d'avertissement (4) du dispositif électrique d'avertissement d'usure des garnitures de frottement sont fixés sur l'étrier flottant (1) au moyen d'une tôle de support (2), la tôle de support recevant la prise de contact d'avertissement (3) et le fil d'avertissement (4) du dispositif électrique d'avertissement d'usure des garnitures de frottement,
caractérisé en ce que l'étrier flottant moulé (1) comporte une saillie non usinée (5) conformée sur l'étrier lors du moulage, présentant une configuration essentiellement rectangulaire et comportant, au niveau de son pied (11), une gorge (12), la tôle de support monobloc (2) disposant d'au moins deux languettes ressorts (6, 7) et entourant la saillie (5) de l'étrier flottant (1) sur tous les côtés par l'intermédiaire de ces languettes ressorts, de sorte que les languettes ressorts (6, 7) s'enclenchent dans la gorge (12).

2. Etrier flottant comportant une tôle de support selon la revendication 1, caractérisé en ce que la tôle de support (2) comporte une patte de maintien (8) sur laquelle est fixée la prise de contact d'avertissement (3) du dispositif électrique d'avertissement d'usure des garnitures de frottement.

3. Etrier flottant comportant une tôle de support selon la revendication 2, caractérisé en ce que la tôle de support (2) comporte un bras replié (9) qui est pourvu d'un anneau ouvert (10) dans lequel on peut accrocher le fil d'avertissement (4) du dispositif électrique d'avertissement d'usure des garnitures de frottement.
